# EUROPÄISCHE PATENTSCHRIFT

(11) **EP 1 700 110 B1**
(45) Veröffentlichungstag und Bekanntmachung des Hinweises auf die Patenterteilung: **01.06.2011**
(21) Anmeldenummer: 04802987.0
(22) Anmeldetag: 20.12.2004
(51) Int. Cl.: G01N 29/12, G01M 7/02

(54) **VORRICHTUNG ZUM LABORMÄSSIGEN TESTEN VON TEILKABINEN FÜR VERKEHRSFLUGZEUGE**
DEVICE FOR TESTING CABIN PARTS OF COMMERCIAL AIRCRAFTS
DISPOSITIF D'ESSAI EN LABORATOIRE DE PARTIES DE CABINES POUR DES AVIONS DE LIGNE

(30) Priorität: 23.12.2003 DE 10361890
(43) Veröffentlichungstag der Anmeldung: 13.09.2006
(73) Patentinhaber: Airbus Deutschland GmbH, 21129 Hamburg (DE)
(72) Erfinder: GLEINE, Wolfgang, 21255 Kakendorf (DE)
(74) Vertreter: Hansmann, Dierk
(86) Internationale Anmeldenummer: PCT/DE2004/002807
(87) Internationale Veröffentlichungsnummer: WO 2005/062035

(56) Entgegenhaltungen:
- GB-A- 2 127 964
- US-A- 4 181 027
- US-A- 5 591 913

## Beschreibung

Die Erfindung bezieht sich auf eine Vorrichtung zum labormäßigen Testen von abgeschlossenen Teilkabinen als Ruheraum zum Einbau in Verkehrsflugzeuge für eine akustische Auslegung und Überprüfung. Solche Vorrichtungen sind z.B aus GB 2 127 964 und US 4 181 027 bekannt.

Die akustische Auslegung von abgeschlossenen Teilkabinen innerhalb von Kabine oder Frachtraum hat oftmals zum Zweck der Erholung/Schlaf für die Flugzeugbesatzung oder Passagiere besonders hohen Lärmschutzanforderungen zu genügen. Dabei wird der Einbauort der Teilkabinen häufig in Umgebungen mit besonders hohen Umgebungslärmpegeln festgelegt. Es kommt daher bei der akustischen Auslegung der Teilkabine darauf an, den Umgebungslärm um die Teilkabine herum und die Lärm-Übertragungswege zu berücksichtigen.

Es ist bekannt, die Teilkabine in eine originale Rumpfsektion einzubauen und außerhalb der Sektion mit Hilfe von an die Rumpfkontur angebauten Hallkammern ein diffuses Schallfeld als akustische Nachbildung von Triebwerksstrahllärm und Grenzschichtlärm zu erzeugen. Die Rumpfsektion wird dabei zu Schwingungen angelegt, welche ihrerseits nach innen hinein und somit auch in Richtung Teilkabine Lärm in Form von Luftschall und auch Körperschall abstrahlt und somit die Teilkabine akustisch anregt.

Die Rumpfsektion teilt dabei die von außen angelegte Lärmanregung anteilsrichtig in nach innen gerichteten Luft- und Körperschall auf. Die Körperschalleinkopplung in die Teilkabine verläuft wegen des originalen Teilkabineneinbaus in das Rumpfsegment intensitäts- und phasenrichtig. Dadurch sind Lärmpegelmessungen in der Teilkabine repräsentativ und es können Modifikationen an der Teilkabine zum Zweck von Lärmreduktionsmaßnahmen entworfen und nachgemessen werden.

Diese Vorgehensweise setzt allerdings stets die Verfügbarkeit einer originalen Rumpfsektion voraus, was insbesondere bei Großraumflugzeugen zu hohen Kosten führt.

Die Aufgabe der Erfindung ist es, auf einfache Weise eine Auslegung und Überprüfung von abgeschlossenen Teilkabinen außerhalb einer Rumpfsektion vorzunehmen und somit eine labormäßige Handhabung zu ermöglichen.

Die Lösung dieser Aufgabe erfolgt erfindungsgemäß dadurch, daß die Teilkabine über mindestens einen Schwingungserreger zur Simulation eines Anregungskörperschall im Bereich von verbindungselementen zur Rumpfstruktur angeordnet ist und der Teilkabine Elemente zur Luftschallanregung zugeordnet sind, wobei die Schwingungserreger für den Körperschall und die Elemente zur Luftschallanregung über Steuer- und Regelgeräte einstellbar sind und die Signale über eine Recheneinheit mit einer Eingabedatei wissenbasierter Daten sowie gegebenenfalls durch Extrapolation der akustischen werte am Einbauort und der Ausbildung der Teilkabine generierbar sind.

Hierdurch wird eine einfache rechnergestützte Simulation der akustischen Verhältnisse ermöglicht und es können auf einfache weise eine Vielzahl von Änderungen und Überprüfungen durchgeführt werden, ohne die entsprechenden Einbauten der Teilkabine in die Rumpfsektoren durchzuführen.

Es wird ferner vorgeschlagen, daß die Eingabedatei wissenbasierter Daten mindestens die Anteile der unterschiedlichen Schallübertragungen aus Analysen bestehender eingebauter akustisch ausgelegter Teilkabinen sowie der Meßwerte der vorliegenden Verhältnisse im Flugzeug bezogen auf Einbauorte.

Eine einfache Anordnung besteht darin, daß zur Luftschallanregung eine zugeordnete Lautsprecheranordnung ansteuerbar ist.

Weiterhin ist vorgesehen, daß zur Luftschallanregung eine zugeordnete Lautsprecheranordnung ansteuerbar ist.

Alternativ wird vorgeschlagen, daß zur Luftschallanregung direkt an die Seitenwände der Teilkabine Hallkammern angeordnet sind.

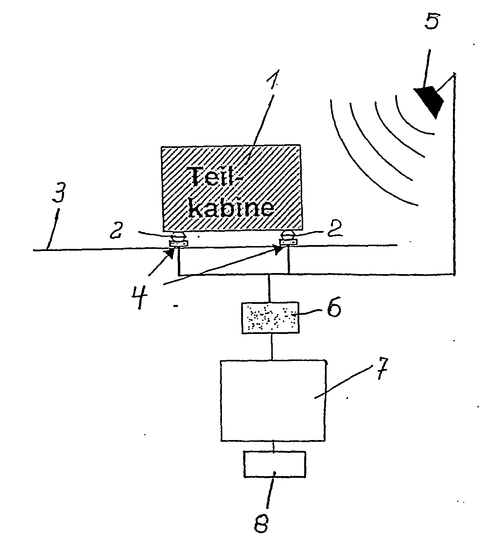

In der Zeichnung ist eine erfindungsgemäße Anordnung schematisch dargestellt.

Hierbei ist eine Teilkabine 1 außerhalb des Flugzeugrumpfes über die üblicherweise verwendeten Schockabsorber 2 auf dem Boden 3 einer Versuchshalle aufgestellt.

Unterhalb der Schockabsorber 2 sind Piezo-Schwingerreger 4 für die Erzeugung des Anregungskörperschalls angeordnet. Zur Luftschallanregung ist in diesem Fall eine Lautsprecheranordnung 5 der Teilkabine 1 zugeordnet.

Die Elemente 4, 5 zur Körperschall- und Luftschallanregung werden über Steuer- und Regelgeräte 6 eingestellt und über eine Recheneinheit 7 versorgt.

Die Recheneinheit 7 ist dabei mit einer Eingabeeinheit 8 gespeist, die wissenbasierte Daten aufweist und hierbei mindestens die Anteile der unterschiedlichen Schallübertragungen aus Analysen bestehender eingebauter akustisch ausgelegter Teilkabinen 1. Zusätzlich werden Meßwerte der vorliegenden Verhältnisse im Flugzeug bezogen auf den Einbauort berücksichtigt.

Durch diese Maßnahmen werden die korrekten Verhältnisse zwischen Anregungsluftschall und Anregungskörperschall eingestellt, wie auch bei der Körperschallanregung, die pro Anregungspunkt entsprechenden Schwingungskomponenten und Phasen, im wesentlichen bei tiefen Frequenzen, bei den Schwingerregern 4 einzustellen.

Die Informationen für die einzelnen Anteile der Schallübertragung werden aus Analysen bereits akustisch ausgelegter Teilkabinen, die in einer originalen Rumpfsektion eingebaut sind, gewonnen. Durch zusätzliche Messungen im Flugzeug sowie einer Extrapolation der akustischen Verhältnisse auf den neuen Auslegungsfall, wie einen anderen Rumpf, andere Teilkabine, wird mit Hilfe akustischer Simulations- und Rechenverfahren (SEA, FEM) berücksichtigt.

## Patentansprüche

1. Vorrichtung zum labormäßigen Testen von abgeschlossenen Teilkabinen als Ruheraum zum Einbau in Verkehrsflugzeuge für eine akustische Auslegung und Überprüfung, wobei die Teilkabine (1) über mindestens einen Schwingungserreger (4) zur Simulation eines Anregungskörperschall im Bereich von Verbindungselementen (2) zur Rumpfstruktur angeordnet ist und der Teilkabine (1) Elemente (5) zur Luftschallanregung zugeordnet sind, wobei die Schwingungserreger (4) für den Körperschall und die Elemente (5) zur Luftschallanregung über Steuer- und Regelgeräte (6) einstellbar sind und die Signale über eine Recheneinheit (7) mit einer Eingabedatei (8) wissenbasierter Daten sowie gegebenenfalls durch Extrapolation der akustischen Werte am Einbauort und der Ausbildung der Teilkabine (1) generierbar sind.

2. Vorrichtung nach Anspruch 1, **dadurch gekennzeichnet, daß** die Eingabedatei (8) wissenbasierter Daten mindestens die Anteile der unterschiedlichen Schallübertragungen aus Analysen bestehender eingebauter akustisch ausgelegter Teilkabinen (1) sowie der Meßwerte der vorliegenden Verhältnisse im Flugzeug bezogen auf Einbauorte enthält.

3. Vorrichtung nach Anspruch 1 oder 2, **dadurch gekennzeichnet, daß** der Schwingungserreger (4) der Teilkabine (1) als Piezo-Schwingerreger ausgebildet sind.

4. Vorrichtung nach einem der Ansprüche 1 bis 3, **dadurch gekennzeichnet, daß** zur Luftschallanregung eine zugeordnete Lautsprecheranordnung (5) ansteuerbar ist.

5. Vorrichtung nach einem der Ansprüche 1 bis 3, **dadurch gekennzeichnet, daß** zur Luftschallanregung direkt an die Seitenwände der Teilkabine (1) Hallkammern angeordnet sind.

## Claims

1. Device for laboratory testing of closed cabin parts as rest areas for fitting in commercial aircraft for acoustic design and checking, the cabin part (1) being arranged over at least one vibration exciter (4) for simulating a stimulation structure-borne sound in the region of joining elements (2) to the fuselage structure, and elements (5) being associated with the cabin part (1) to stimulate air-borne sound, the vibration exciter (4) for structure-borne sound and the elements (5) to stimulate air-borne sound being adjustable via controllers and regulators (6), and it being possible to generate the signals via an arithmetic and logic unit (7) with an input file (8) of knowledge-based data, and if appropriate by extrapolation of the acoustic values at the installation location and the design of the cabin part (1).

2. Device according to Claim 1, **characterized in that** the input file (8) of knowledge-based data includes at least the proportions of different sound transmissions from analyses of existing installed acoustically designed cabin parts (1), and the measured values of conditions which are present in the aircraft, related to installation locations.

3. Device according to Claim 1 or 2, **characterized in that** the vibration exciter (4) of the cabin part (1) is in the form of a piezo vibration exciter.

4. Device according to any one of Claims 1 to 3, **characterized in that** to stimulate air-borne sound, an assigned loudspeaker arrangement (5) can be controlled.

5. Device according to any one of Claims 1 to 3, **characterized in that** to stimulate air-borne sound, reverberation chambers are arranged directly on the side walls of the cabin part (1).

## Revendications

1. Dispositif d'essai en laboratoire de cabines modulaires fermées formant espaces de repos, destinées à être installées dans des avions de ligne, pour la mise au point acoustique et le contrôle de celles-ci, dans lequel la cabine modulaire (1) est placée sur au moins un générateur de vibrations (4) aux fins de simuler un bruit de structure excitateur dans la région d'éléments de liaison (2) à la structure de fuselage, et des éléments (5) pour l'excitation de bruits aériens sont associés à la cabine modulaire (1), les générateurs de vibrations (4) pour les bruits de structure et les éléments (5) pour l'excitation de bruits aériens peuvent être réglés au moyen d'appareils de commande et de réglage (6) et les signaux sont générés par l'intermédiaire d'une unité de calcul (7) utilisant un fichier d'entrée (8) de données basées sur les connaissances et le cas échéant par extrapolation à partir des données acoustiques à l'emplacement d'installation et de la configuration de la cabine modulaire (1).

2. Dispositif selon la revendication 1, **caractérisé par le fait que** le fichier d'entrée (8) de données basées sur les connaissances contient au moins la part des différents modes de transmission des bruits provenant d'analyses de cabines modulaires (1) existantes, installées et adaptées sur le plan acoustique, ainsi que des valeurs de mesure des conditions ambiantes dans l'avion relatives aux emplacements d'installation.

3. Dispositif selon la revendication 1 ou 2 **caractérisé par le fait que** le générateur de vibrations (4) de la cabine modulaire (1) est agencé en générateur piézoélectrique.

4. Dispositif selon une des revendications 1 à 3, **caractérisé par le fait que** pour l'excitation de bruits aériens, on pilote un système de haut-parleurs (5) adapté.

5. Dispositif selon une des revendications 1 à 3, **caractérisé par le fait que** pour l'excitation de bruits aériens, des chambres de réverbération sont disposées sur les parois latérales de la cabine modulaire (1).
